# EUROPEAN PATENT APPLICATION

(11) **EP 0 528 237 A2**
(43) Date of publication of application: **24.02.1993**
(21) Application number: 92113119.9
(22) Date of filing: 31.07.1992
(51) Int. Cl.: G06F 9/44

(54) **A method for preparing control program and a preparing apparatus thereof**

(30) Priority: 08.08.1991 JP 199152/91
(71) Applicant: HITACHI, LTD., Chiyoda-ku, Tokyo 100 (JP)
(72) Inventor: Wada, Yutaka, Hitachioota-shi, Ibaraki 313 (JP); Nakahara, Takayuki, Hakui-shi, Ishikawa 925-06 (JP); Nakamura, Tomoharu, Hitachioota-shi, Ibaraki 313 (JP)
(74) Representative: Strehl Schübel-Hopf Groening & Partner

(57) **Abstract**

In accordance with the present invention, control circuit diagram wherein a plurality of modules are connected is prepared by using input information. The prepared control circuit diagram and a plurality of inspective information on the modules are displayed in display apparatus. Net list information is prepared by using connecting information at output side and input side of the modules based on graphic data on the control circuit and assigned inspective data from a plurality of the displayed inspective information. Main body section of control program is prepared by using connecting information on the modules contained in the net list information.Corresponding inspective data preparing program is read out from a memory means based on the inspective information which is contained in the net list information. the control program is prepared by combining the inspective data preparing program with the main body section of the control program.

Necessary inspective data for inspection of the control program are automatically prepared by the inspective data preparing program.

## Description

### Background of the Invention

The present invention relates to a method for preparing control program and a preparing apparatus thereof.

In a digital control apparatus, a logic circuit, which has been realized by connecting circuit elements operated with analogous input, is realized by software for microcomputer.

The software for microcomputer is stored as machine language in program memories composed of non-volatile memories, that is ROM (Read Only Memory), and volatile memories etc. such as EPROM (Electrically Programmable Read Only Memory) which can accept additional writing and correction of the memory content, and read out successively and executed.

As for preparing method of the software for microcomputer supplied to conventional digital control apparatus, a method for automatically preparing a program to realize objective functions by supplying functional block diagram etc. as design information of the software through an input/output apparatus which could perform graphic processing was disclosed in JP-A-1-155473 (1989).

As for methods for smoothly inspecting the prepared program, the following techniques were disclosed.

As for a technique to support testing steps of the program, a method wherein an executable statement automatically asking an inspector for input of testing data relating to each module contained in the program was included in the program in automatic preparing process of the program based on design document was disclosed in JP-A- 2-253443 (1990).

In accordance with the above described method, the input executable statement of the testing data is displayed on a image plane when testing of the program, and accordingly, the inspector can easily obtain necessary data for inspection of the prepared program. However, the inspector can not grasp information, which is reflected to the program preparation, such as design philosophy of the program developer (especially design philosophy on preparation of the design block diagram) which is reflected to the preparation of the program, and consequently, there is a possibility that the inspector can not think of the necessary input testing data even though the inspector watches the input executable statement for asking for input of testing data. That means it is necessary that the inspector thoroughly understand structure and function of the program prepared by the developer. But, the above described necessity is very hard to be realized in practical.

An apparatus for automatic preparation of a list of inspective items which describes necessary inspective items for inspection of a program is disclosed in JP-A-2-216547 (1990).

The apparatus comprises an input apparatus for supplying program design information, a chart editing apparatus for program which edits the program design information, a memory apparatus for storing the chart for program prepared by the chart editing apparatus for program, and an apparatus for automatic preparation of a list of inspective items which retrieves control flow of the chart for program stored in the memory apparatus and automatically prepares the list of inspective items by extracting condition of the control flow and processing contained in the control flow. Accordingly, as the necessary items for inspection of the program are extracted from the chart for program and the list of inspective items is automatically prepared, the list of inspective items can be concurrently and easily changed even though design of program is changed. However, extraction of the inspective items from the chart for program is troublesome because it is necessary to compose a logic for the extraction of the inspective items previously in consideration of all possible cases.

Farther, JP-A-2-220146 discloses an automatic testing system for program having functions to prepare the testing data automatically in order to prevent missing of testing by manual preparation of the testing data. A testing data preparing system provided to the automatic testing system for program comprises the steps of storing necessary variables and program design information for executing objective programs for the testing, retrieving the variables and the program design information when testing, preparing testing cases by combining the variables, selecting testing data from the variables and the program design information in accordance with the testing cases, and assigning the selected testing cases to the variables. However, the testing data preparing system is used to different kind of program in preparation of testing data, it is necessary to store such a program design information as shown in FIG. 2 in JP-A-2-220146 (1990) previously in data base.

### Summary of the Invention

The object of the present invention is to provide a method for preparing control program which enable inspector to perform inspection of a control program easily without understanding structure and function of the objective control program, and can simplify composition of the program and the inspective apparatus, and a preparing apparatus thereof.

Feature of the present invention is to prepare a control program by the steps of preparing a control circuit diagram which is a control circuit diagram for main body section of the objective control program wherein a plurality of modules are connected by using supplied information, supplying necessary information for inspection of the modules, supplying related inspective data preparing program based on the inspective information to the main body section of the control program which is prepared in accordance with the information from the control circuit diagram, and preparing the control program.

In accordance with the present invention, the control program is so prepared that the inspective data preparing program is included in the main body section of the control program, the inspective data are automatically prepared at the inspection of the control program, and consequently, the inspector can simply perform the inspection of the program without understanding structure and function of the objective control program and, farther, design philosophy of the developer at the developing stage of the control program. Besides, as the control program contains the inspective data preparing program, the apparatus for inspection of the control program is simplified and inspection of different kind of control program becomes possible.

### Brief Description of the Drawings

FIG. 1 is a composing diagram illustrating an apparatus for preparing control program relating to an embodiment of the present invention,
FIG. 2 is a drawing for explanation illustrating an example of inspective information stored in the memory means 15 in FIG. 1,
FIG. 3 is a drawing for explanation illustrating an example of image displayed in the display apparatus shown in FIG. 1,
FIG. 4 is a drawing for explanation illustrating an example of a net list composition based on the design block diagram displayed by the image in FIG. 3,
FIG. 5 is a drawing for explanation illustrating an example of a source program prepared based on information from the net list shown in FIG. 4,
FIG. 6 is a composing diagram illustrating an example of recording medium for storing control programs which are prepared by the control program preparing apparatus shown in FIG. 1,
FIG. 7 is a composing diagram illustrating an embodiment of a digital control apparatus wherein the control program prepared by the control program preparing apparatus shown in FIG. 1 is provided,
FIG. 8 is a drawing for explanation of processing steps which are executed at the inspection of the main body section of the control program in the digital control apparatus shown in FIG. 7, and
FIG. 9 is a drawing for explanation illustrating memory state of data which indicates execution and no operation of the inspective program in the program memory apparatus shown in FIG. 7.

### Detailed Description of the Preferred Embodiments

Hereinafter, the embodiments of the present invention are explained in detail referring to drawings.

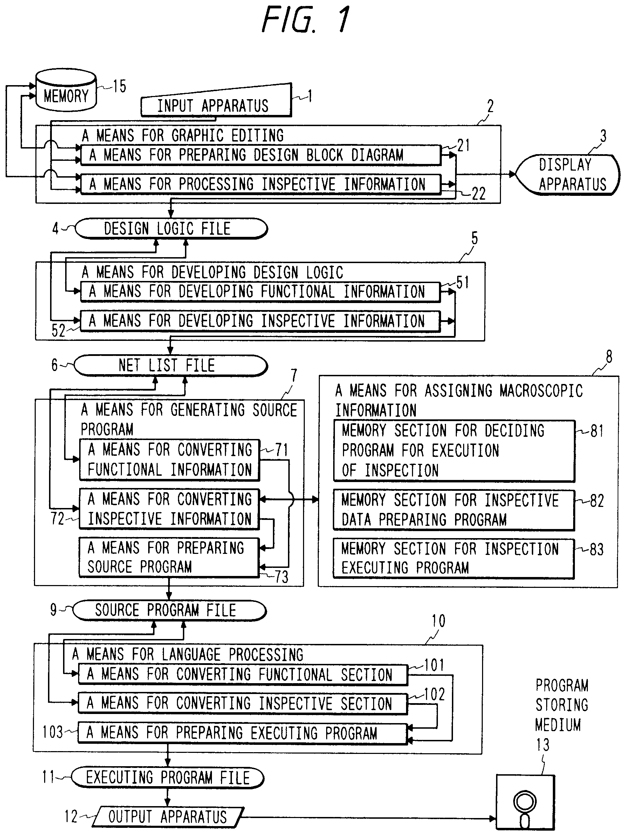

FIG. 1 illustrates composition of a control program preparing apparatus which is an embodiment of the present invention. The program preparing apparatus is to prepare programs for control software which is provided to a digital control apparatus.

In FIG. 1, the present embodiment comprises functional section such as the input apparatus 1, the means for graphic editing 2, the display apparatus 3, the means for developing design logic 5, the means for generating source program 7, the means for assigning macroscopic information 8, the means for language processing 10, and the output apparatus 12 etc. and memory means such as the design logic file 4, the net list file 6, the source program file 9, and executing program file 11 etc.

The means for graphic editing 2, the means for developing design logic 5, the means for generating source program 7, the means for assigning macroscopic information 8, and the means for language processing 10 are composed of one or a plurality of computers, or multiprocessors. The means for graphic editing 2 comprises the means for preparing design block diagram 21 and the means for processing inspective information 22. The means for developing design logic 5 is provided with the means for developing functional information 51 and the means for developing inspective information 52. The means for generating source program 7 includes the means for converting functional information 71, the means for converting inspective information 72, and the means for preparing source program 73. The means for assigning macroscopic information 8 is provided with the means for deciding execution of inspection 81, the means for preparing inspective data 82, and the means for executing inspection 83. Each of the means for deciding execution of inspection 81, the means for preparing inspective data 82, and the means for executing inspection 83 above described is provided with programs for realizing corresponding each function. The means for language processing 10 is composed of the means for converting functional section 101, the means for converting inspective section 102, and the means for preparing executive program 103. The solid line having arrow mark in FIG. 1 indicates flow direction of data.

First, an user who prepares the control program (program developer) prepares graphic information of design block diagram (sequential control circuit diagram) indicating each function of a plurality of modules contained in the control program which is used in objective control apparatus by using the means for preparing design block diagram 21 with information supplied by the user through the input apparatus 1 and information stored in memory means 15 of the control program preparing apparatus. The means for preparing design block diagram 21 is a kind of CAD (Computer Aided Design). The graphic information of the design block diagram prepared by the means for preparing design block diagram 21 is transmitted to the display apparatus 3 and displayed on an image plane of the display apparatus 3. Definition of the block previously described is such that the block is composed of a combination of executable statements which can be converted to processing unit of the control program. And the module can take various states from a block to whole program corresponding to size and structure of the control program with designation of a region to be the block in the design block diagram indicated in the display apparatus 3 by the program developer through the input apparatus 1.

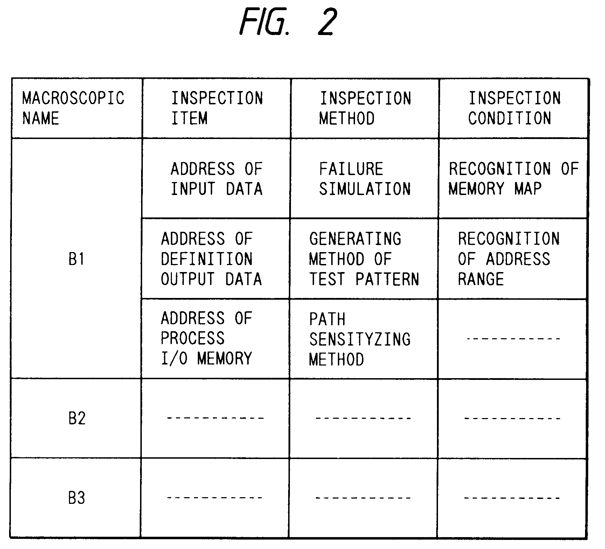

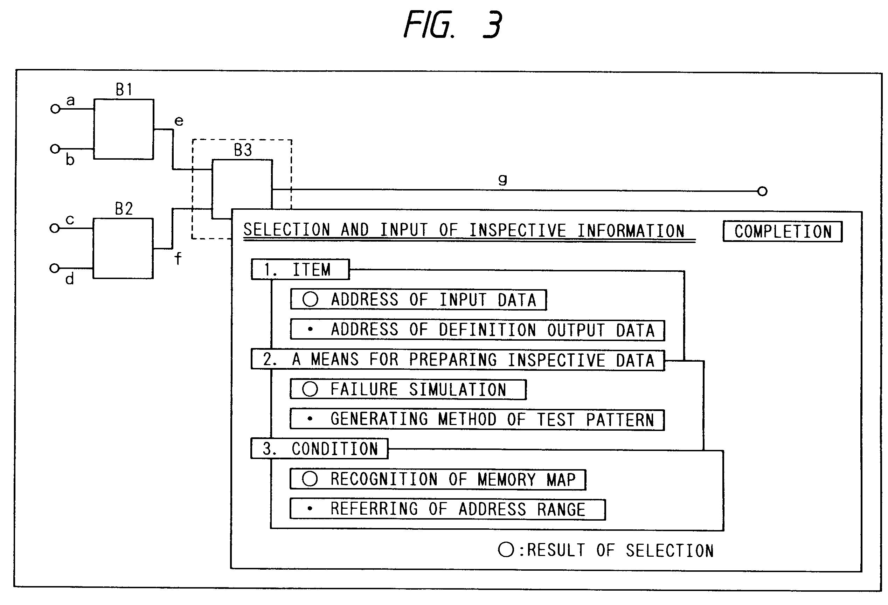

Next, the region of the module which is designated by the program developer in the design block diagram indicated in the display apparatus 3 is supplied through the input apparatus 1. The means for processing inspective information 22 retrieves the inspective information from the memory means 15 of the control program preparing apparatus and supplies the information to the display apparatus 3, and concurrently, supplies an information on identifying marks (for example, the frame indicated by the dashed line in FIG. 3) to the display apparatus 3 in order to recognize the designated information on the image plane. Accordingly, the information shown in FIG. 3 is displayed on the image plane of the display apparatus 3. FIG. 2 shows an example of data composition on the inspective information which is stored in the memory means 15 of the control program preparing apparatus. The inspective information is the information on inspective items, inspective methods, and inspective conditions. The inspective method is a method for preparing inspective data.

The program developer selects corresponding items related to the designated modules from indicated each inspective items, inspective methods, and inspective conditions by watching the image shown in FIG. 3 which is displayed in the display apparatus 3. Data on the selected each item is supplied through the input apparatus 1. The items attached with a dark circle in FIG. 3 are selected by the program developer in relation to the designated module B3 (for example, AND circuit). The means for processing inspective information 22 supplies inspective information which is supplied by the program developer. FIG. 3 indicates an example in which the program developer selected the inspective item "Address of input data", the inspective method "Fault simulation", and the inspective condition "Recognition of address range" as inspection executing condition of the module B3 among each inspective information. The means for processing inspective information 22 supplies the designated module and related input of inspective information to the design logic file 4. The design logic file 4 stores the above described information supplied from the means for processing inspective information 22. Farther, the design logic file 4 stores graphic information of design block diagrams supplied from the means for preparing design block diagram 21. Subsequently, each of the above described processing is executed on all of other modules in the control software.

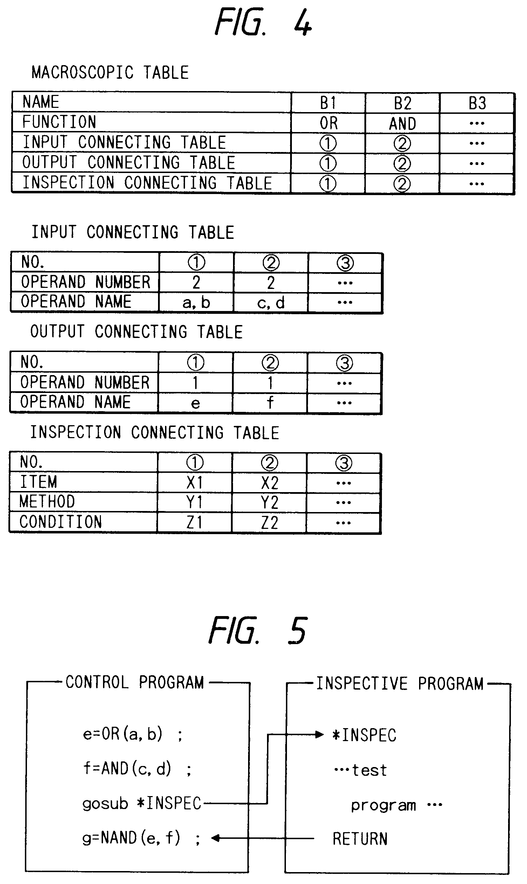

After execution of the above described each processing is completed, the means for developing functional information 51 selects the graphic information on corresponding design block diagram from the design logic file 4, and prepares information which indicates each connecting relationship at input side and output side for each designated module (for example, B1, B2, ^{...}) based on the selected information. The information shown in FIG. 4 except information on the inspection connecting table are the information prepared by the means for developing functional information 51. The means for developing inspective information 52 selects the above described designated modules and related inspective information from the design logic file 4, and prepares data on the inspection connecting table shown in FIG. 4. The information prepared by the means for developing function 51 and the means for developing inspective information 52 are supplied to the net list file 6 and stored therein. FIG. 4 is an example of the net list prepared by the above described processing by the means for developing design logic 5 based on information on the design block diagram. Each of the (1), (2) in the macroscopic table corresponds to the same number in the input connecting table, the output connecting table, and the inspection connecting table.

The net list information on the module B1 in FIG. 3 is explained hereinafter. The module B1 is "OR", and input side is connected to a, b, and output side is connected to e. Farther, inspective item on the module B1 is X1, inspective method is Y1, and inspective condition is Z1. The means for converting functional information 71 reads out information on macroscopic connecting relationship (data on input connecting table and output connecting table on each module) which is indicated in the net list from the net list file 6, and prepares control source program for executing control operation on each module based on the above described information on macroscopic connecting relationship. For example, a control source program of AND circuit is prepared for the module B2. A control source program on fundamental logic circuit such as AND, OR, and NOT circuits are stored in a memory (not shown in figure), and control source program for corresponding module can be prepared by using them. Besides, the means for converting inspective information 72 selects inspective data preparing program corresponding to a module form the memory section for the inspective data preparing program 82 based on data on inspective method for corresponding module (a method in the inspective connecting table for one of modules in the net list, that is data on inspective method), and corrects parameters of the inspective data preparing program so as to correlate the corresponding module by using inspective information which is correlating to the corresponding module (especially, information on inspective items and inspective condition).

The memory section of the inspective data preparing program 82 stores inspective data preparing programs relating to each of the fault simulation, the generating method of test pattern, and the method for process steps activation shown in FIG. 2. For example, regarding to the module B3 in FIG. 3, the fault simulation program is selected as the inspective data preparing program. The inspective data preparing program is selected for each module. An example of the method using the fault simulation, the generating method of test pattern, and the path sensitizing method was disclosed in a reference, DHIRAJ K. PRADHAN: Fault-Tolerant Computing Theory and Techniques Volume 1, PRENTICE HALL Englewood Cliffs, New Jersey 07632 U.S.A.(1986). In the reference, parallel fault simulation, which is one of the fault simulation methods, is described on page 216-224. Boolean difference method, which is one of the generating methods for test pattern, is explained from line 5 on page 24 to line 10 on page 31. And, D-algorithm, which is one of the path sensitizing method, is described from line 11 on page 31 to page 35. Programs for preparing inspective data based on each of the above described method are stored in the memory section of the inspective data preparing program 82. The means for converting inspective information 72 reads out the program for deciding execution of inspection (the program for deciding whether the inspection must be executed or not) which is stored in memory section of the program for deciding execution of inspection 81 and the program for execution of inspection which is stored in memory section of the program for execution of inspection 83. The control source programs for executing control operation relating to each module, and the read out inspective data preparing program, the program for deciding execution of inspection, and the program for executing inspection are supplied to the means for preparing control source program 73. The means for preparing source program 73 connects all control source programs for each module to form a control source program by using the information of input/output connecting table in the net list. Farther, the means for preparing source program 73 inserts pointers, which are used for read out the corresponding program for deciding execution of inspection, the program for execution inspection, and the program for preparing inspective data, at designated locations in the control source program for each module. FIG. 5 indicates an example of the prepared source programs. The control source program obtained by combining the control source programs for each module, the source programs of the program for deciding execution of inspection and the program for executing inspection, and the program for preparing inspective data, that is the corrected source program, are stored in the source program file 9.

The means for converting functional section 101 read out the control source program, which is prepared by the above described processes, from the source program file 9 and converts the control source program to the control program written in machine language (called control program main body section) which is executable by computer, the control apparatus. The means for converting inspective section 102 converts the program for preparing inspective data, the program for deciding execution of inspection, and the program for executing inspection (the program for executing inspection and monitoring output data from the module in relation to the input data to the module) which are stored in the source program file 9 to the above described machine language. The means for preparing inspection executing program 103 prepares the control program for practical use by linking the control program main body section which is converted to machine language with the program for preparing inspective data, the program for deciding execution of inspection, and the program for executing inspection, all of which are converted to machine language.

The control program for practical use prepared in the above described manner is stored in the executing program file 11, supplied to external program memory medium 13 (for example, floppy disk by the output apparatus 12, and stored therein. The control program for practical use includes the control program main body section corresponding to the sequence control circuit diagram and the inspection program section corresponding to each program for inspection. Because the control program for practical use prepared in the above described manner can link the program for preparing inspective data, the program for deciding execution of inspection, and the program for executing inspection to the main body section of the control program, the inspective data for inspection can be prepared automatically, and the control program can be easily inspected with the inspective data.

Farther, when the program developer finishes preparation of a part (for example, a block) at least of graphic image of the design block diagram relating to the objective control by the means for preparing design block diagram 21, necessary inspective information for preparing inspective data on the above described graphic image is supplied. That is, the program developer performs input of the above inspective data during preparation of the design block diagram or immediately after completion of the preparation. Accordingly, because input operation of corresponding inspective data by the inspector for the prepared control program at the inspection is not necessary, the inspection of the control program can be easily performed and time for the inspection can be decreased.

JP-A-2-253443 discloses a method in which executable statements relating to input/output of the inspective data are combined to the program in order to support input operation of the inspective data corresponding to each module in the program at execution of the inspection, and what must be supplied as initial values is indicated on image plane based on the input executable statement. but, inspector can not immediately performs input operation of the initial values to be supplied because the inspector can not understand situation at preparing time of the design block diagram even though watches the image plane.

The present embodiment can solve such a problem.

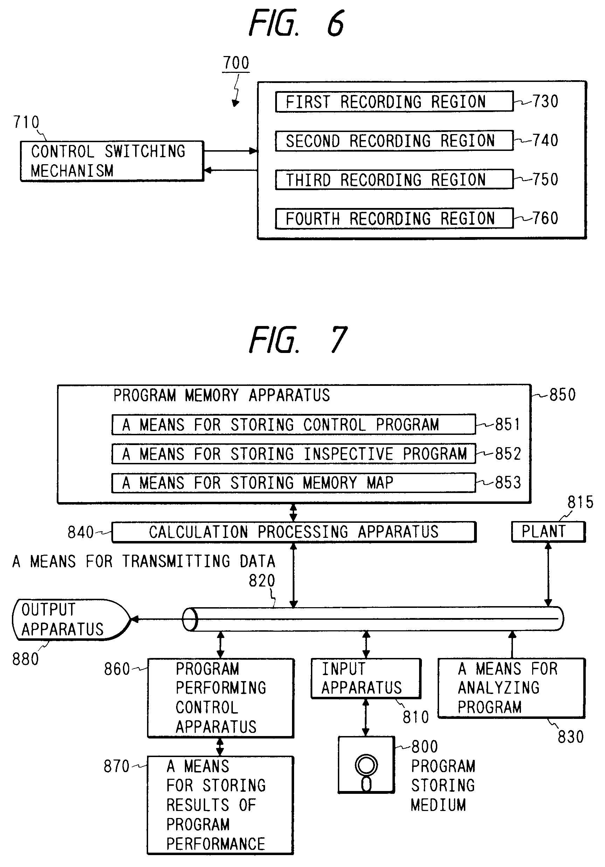

The control program prepared by the present embodiment includes inspective program in itself, and accordingly, can easily perform the inspection matching to the control program by using the apparatus shown in FIG. 7 which is explained later.
And, the control program prepared by the above described embodiment can be confirmed in its function of software by automatic processing in accordance with execution of inspection executing program provided in the digital control apparatus.

FIG. 6 indicates an example of composition of the recording medium 700 which stores control program prepared in the above described manner in a form of software including the above described each programs for inspection.

The recording medium 700 is composed of the switching mechanism 710, and four kinds of recording regions 730, 740, 750, 760.

Hereinafter, explanation of the operation in the present embodiment concurrently explains function of each sections.

In accordance with the present embodiment, the control program prepared by the control program preparing apparatus shown in FIG. 1 is stored in the recording medium 700, and the control program read out from the recording medium 700 is provided to digital control apparatus etc. The program is stored in the manner described hereinafter. The main body section of the control program is stored in the first recording region 730, the inspection executing program for inspecting operation of the main body section of the control program during operation of the control software is stored in the second recording region 740, the program for preparing inspective data to prepare inspective input information used in the program for executing inspection is stored in the third recording region 750, and the program for deciding execution of inspection which selects concurrent execution of the means for executing inspection during operation of the main body section of the control program is stored in the fourth recording region 760, respectively.In the digital apparatus which is provided with the control software, the switching mechanism 710 is operated in order to supply selective information whether the program for executing inspection must be concurrently executed or not to the program for deciding execution of inspection during operation of the main body section of the control program.

FIG. 7 illustrates an embodiment indicating composition of the digital apparatus to which the control program prepared in the manner described above is provided. The digital control apparatus is a programmable controller containing control programs in itself. In FIG. 7, the digital control apparatus of the present embodiment is provided with the input apparatus 810, the means for data transmission 820, the means for program analysis 830, the means for calculation processing 840, memory apparatus for programs 850, the means for controlling execution of program 860, the means for storing result of program execution 870, and the output apparatus 880. And, the program memory apparatus 850 is provided with the means for storing control program 851, the means for storing inspective program 852, and the means for storing memory map 853. The solid line having arrow mark in FIG. 7 indicates flow direction of data.

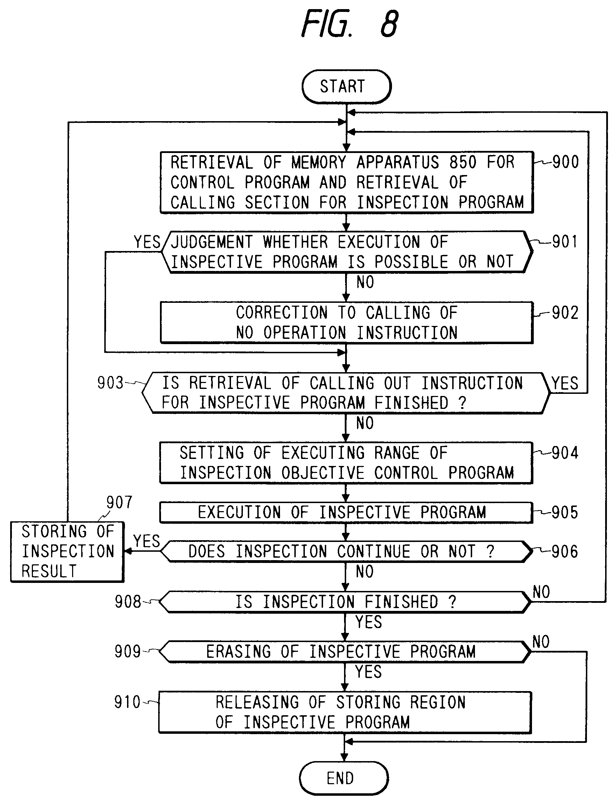

FIG. 8 illustrates processing steps of inspecting method for control program with the composition of the digital control apparatus shown in FIG. 7. The processing steps shown in FIG. 8 is provided in the program execution control apparatus 860. The program execution control apparatus 860 controls inspective processing by the calculation processing apparatus 840 in accordance with the processing steps shown in FIG. 8.

Hereinafter, explanation on content of the processing in the present embodiment referring to FIG. 8 concurrently explains functions of each portion in the present embodiment.

First, the inspector installs the program recording medium 800, which stores control programs prepared by the control program preparing apparatus shown in FIG. 1, in the input apparatus 810. The control program is transmitted to the program memory apparatus 850 by the program analyzing apparatus 830 through the means for data transmission 820. At that time, the main body section of the control program is stored in the means for storing control program 851, the inspective program for executing inspection of the main body section of the control program is stored in the means for storing inspective program 852, and address information which connects the above described control program and the inspective program in order to read out the inspective program from the main body section of the control program is stored in the means for storing memory map 853. The inspective program includes the inspective data preparing program, the inspection executing program, and the program for deciding execution of inspection to execute both of the above described programs.

The inspection of the main body section of the control program which is stored in the program memory apparatus 850 is executed at the calculation processing apparatus 840 based on the processing steps shown in FIG. 8 which is initiated by the program execution controlling apparatus 860 in accordance with instruction given from the inspector through the input apparatus 810. First, at the step 900 in FIG. 8, storing address in the means for storing control program 851, wherein an instruction to read out the inspective program (called inspective program read out instruction) which is included in the main body section of the control program is stored, is retrieved and read out from the means for storing control program 851 by taking the storing initiating address of the objective program stored in the means for storing control program 851 as a starting point. At the end of the step 900, the read out storing address is temporarily stored in the means for storing control program 851 in order to use the read out storing address as a retrieval starting address in next execution of the step 900.

Subsequently, at the step 901, a menu information for asking the inspector for judgement whether the inspective program corresponding to the inspective program read out instruction must be executed or not is displayed in the output apparatus (display apparatus) 880. In accordance with the menu information, the inspector supplies information whether the execution of the inspective program is necessary or not by the input apparatus 810. When the execution of the inspective program is necessary, the processing goes to YES from the step 900, and when the execution is not necessary, the processing goes to NO. In the above described cases, the judging information of the inspector can be based on information supplied from key board of the input apparatus 810, or information based on designation of selective menu which is displayed on image plane of the output apparatus 880 by using pointing devices such as a mouse etc. Farther, when asking the inspector whether the execution of the inspection is necessary or not, an instruction requiring selection of execution or no execution of the inspection displayed on the image plane of the output apparatus 880 can be usable. But, when no execution of the inspective program corresponding to the inspective program read out instruction is selected at the step 901, the read out address corresponding to the inspective program read out instruction is referred at the step 902, and an execution instruction address (data stored in the means for storing memory map 853) indicating the means for storing inspective program 852 which stores practical processing procedure (inspective program) corresponding to the read out address is so corrected that the execution instruction address indicates a region storing no operation instruction in order to execute no operation instruction instead of reading out the inspective program.

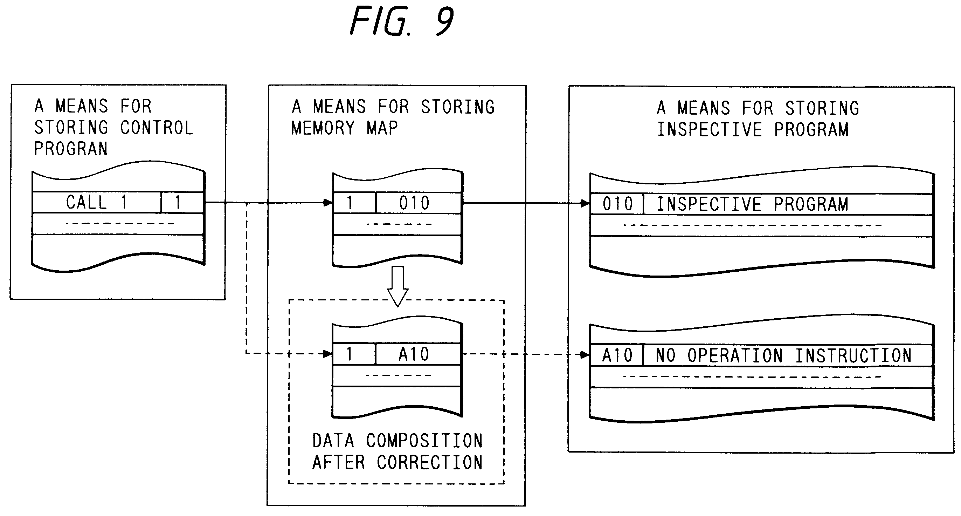

For example, using the means for storing program composed as shown in FIG. 9, details of the processing at the step 900 and 902 are explained hereinafter. The following processing steps designated as (1)-(3) are executed at the step 900, and (4) is executed at the step 902.
(1) The read out instruction for the inspective program stored in the main body section of the control program "CALL 1" is retrieved from the control program storing region (memory apparatus 851).
(2) The execution instruction address "010" for the inspective program corresponding to the read out address "1" included in the read out instruction for the inspective program "CALL 1" is taken out from the means for storing memory map 853.
(3) An information, A READ OUT ADDRESS CORRESPONDING TO THE EXECUTION INSTRUCTION ADDRESS "010" IS "1", is written in the memory content of the "inspective program "1" corresponding to the execution instruction address "010" among the stored inspective programs in the means for storing inspective program 852.
(4) The data "010" in the means for storing memory map 853 is corrected to "A10" so that the address where the no operation instruction is stored in the means for storing inspective program 852 is indicated in order not to read out the inspective program.

In the above described steps, the information, THE READ OUT ADDRESS CORRESPONDING TO THE EXECUTION INSTRUCTION ADDRESS "010" IS "1", which is written in memory content of the inspective program is used at the correction of data in the memory map stored in the means for storing memory map in order to make the inspective program which has been impossible to be read out possible to be read out again. Besides, after the data in the means for storing inspective program 852 including the above described information are stored in an external recording medium and vacant region in the means for storing inspective program 852 is utilized for other processing, the execution instruction address is reconstructed when the inspective program which has been once stored in the external recording medium is rewritten in the means for storing inspective program 852. For example, utilization of arbitrary storing region becomes possible by rewriting the data in the means for storing memory map 853 based on the reconstructed execution instruction address even if the execution instruction address of the inspective program 1 becomes not "010".

Farther, whether any unsearched inspective program read out instruction remains or not in the main body section of the control program stored in the means for storing control program 851 is judged at the step 903. When the unsearched inspective program read out instruction remains (when the judgement at the step 903 is YES), return to the step 900 and execute the procedure from the step 900 again.

Next, execution initiating address and finishing address in the main body section of the control program for inspection is settled based input information supplied by the inspector through the input apparatus 810 at the step 904. When asking the inspector for the input of the information, a method can be used, in which the design block diagram corresponding to the main body section of the control program is indicated in the output apparatus 880, and guide information is provided so as to be able to supply the initiating and finishing address in the corresponding control program by selecting and pointing out the desired block in the design block diagram by the inspector with the input apparatus 810, especially position indicating apparatus such as a mouth etc. Farther, a method wherein the inspector directly supplies the execution initiating and finishing address of the main body section of the control program by numerical values and marks input apparatus such as a key board is naturally usable.

At the step 905, the main body section of the control program is executed from the portion of the execution initiating address of the main body section of the control program which is settled at the step 904, and during the processing, the corresponding inspective program is read out from the means for storing inspective program 852 based on the inspective program read out instruction depending on necessity, and the inspection on the corresponding portion of the main body section of the control program is executed. When the execution of the main body section of the control program reaches the execution finishing address, the execution of the main body section of the control program is finished. In the above described case, the main body section of the control program which is prepared by the control program preparing apparatus shown in FIG. 1 is executed depending on necessity. The inspection on the main body section of the control program with the above described inspective program is performed by using inspective data prepared by the inspective data preparing program and executing the inspection executing program.

Farther, at the step 906, the inspector is asked for input of judging information whether the inspective steps from the step 900 to the step 905 must be repeated or not by displaying the menu in the output apparatus 880. And, depending on the result of the judging information, the newest result of the control program inspection at the step 907 is stored in the means for storing result of program execution 870 at the step 906, and selection whether return to the processing at the step 900 or execute the processing at the step 908 is performed.

Judgement on finishing of the inspection is performed based on data supplied by the inspector through the input apparatus 810 at the step 908. Farther, when the inspector instructs to erase the inspective program by the input apparatus 810, the judgement at the step 909 becomes YES, and the same processing as the processing at the step 902 is executed at the step 908 so that all execution instruction address stored in the means for storing memory map 853 indicate no operation instruction in order to release the data in the means for storing inspective program 852 to other processing. And, at the step 910, a processing that the inspective information is written out to the external recording medium with the information on the memory map can be performed.

In the present embodiment, detailed description on input data on the control program and settlement of calculation condition etc. are omitted, but, the above described settling processes are to be executed in an arbitrary inspective program at the step 905.

Accordingly, with the digital control apparatus in the present embodiment, execution of the inspection can be selected during the execution of the control program wherein the inspective program is provided, and during the inspection, such procedures as preparation of the inspective input data and judgement of the inspection result are executed by an automatic processing. Farther, erasing of unnecessary inspective program in order to utilize the program memory effectively is possible.

In the present embodiment, in a case when controlling of an objective, for example, the plant 815 is performed, the calculation processing apparatus 840 reads out the main body section of the control program from the means for storing control program 851, and supplies control signals obtained based on the above described program to the plant 815 through the means for data transmission 820. In order not to operate the inspective program read out instruction included in the main body section of the control program, the execution instruction address stored in the means for storing memory map 853 is so rewritten as to execute no operation instruction. When inspection of the control program is executed, the execution instruction address is so rewritten as to read out the inspective program.

The digital control apparatus shown in FIG. 8 can be used as a single purpose apparatus for inspection of control program in a condition being separated from the means for data transmission 820 and the objective for controlling (for example, the plant 815). When using as a single purpose apparatus, inspection on different kind of control programs can be performed easily because the inspective data preparing program is included in the control program.

In the embodiment of the present invention shown in FIG. 7, plants and systems which are concrete application objectives of the digital control apparatus and control program therefor are not especially restricted to the one of special kinds and special functions. Accordingly, the digital control apparatus shown in FIG. 7 is widely applicable to digital control apparatus which composes control and monitoring system in such industrial application field as power generation, power transmission, transformation, chemistry, water treatment, steel, distribution, publication etc. and in such public field as transportation, and communication etc. However, the digital control apparatus and the control program preparing apparatus therefor both of which have been explained in each of the above embodiments are especially most effective for large scale control and monitoring systems wherein computers for control and programmable controllers are hierarchically connected with a net work in the above described field.

## Claims

1. A method for preparing control program characterized in comprising the steps of:
preparing a control circuit diagram for a main body section of an objective control program which is composed of a plurality of modules which are mutually connected by using input data,
supplying necessary inspective information on said modules, and
putting corresponding inspective data preparing program based on said inspective information into said main body section of the control program which is prepared based on information on said control circuit diagram.

2. A method for preparing control program as claimed in claim 1, wherein said control program is prepared by combining inspection executing program in addition to said inspective data preparing program with said main body section of the control program.

3. A method for preparing control program as claimed in claim 1, wherein
information on prepared said control circuit diagram and a plurality of said inspective information are displayed in display apparatus,
input of said inspective information is assigned by said input apparatus from a plurality of said displayed inspective information as corresponding to said module included in said control circuit diagram,
said corresponding inspective data preparing program is retrieved from memory apparatus based on said assigned inspective information, and
said retrieved inspective data preparing program is combined to said main body section of the control program.

4. A method for preparing a control program as claimed in claim 1, wherein
net list information for said modules is prepared by using connecting information on said modules included in said control circuit at input side and at output side and inspective information on said modules, and
said control program is prepared by using said net list information.

5. A method for preparing a control program as claimed in claim 4, wherein said control program is prepared by converting source program which is prepared based on said net list information in machine language.

6. An apparatus for preparing control program characterized in comprising
a means for preparing control circuit diagram corresponding to main body section of objective control program wherein a plurality of modules are connected, and
a means for preparing said control program by combining corresponding inspective data preparing program based on necessary inspective data relating to said modules with the main body section of said control program which is prepared based on the information on said control circuit diagram.

7. An apparatus for preparing control program as claimed in claim 6, wherein said means for preparing control program prepares said control program by combining inspection executing program in addition to said inspective data preparing program with the main body section of said control program.

8. An apparatus for preparing control program as claimed in claim 6, characterized in comprising
display apparatus for displaying prepared said control circuit diagram and a plurality of supplied inspective information,
memory apparatus for storing a plurality of inspective data preparing programs,
a means for retrieving and reading out said corresponding inspective data preparing program from said memory apparatus based on said inspective information which is related to said modules included in said control circuit diagram and assigned by input apparatus from a plurality of said displayed inspective information, and
said means for preparing control program to prepare said control program by combining said read out inspective data preparing program with the main body section of said control program.

9. An apparatus for preparing control program as claimed in claim 6, characterized in comprising
a memory means for storing a plurality of inspective information, and
a means for reading out a plurality of said inspective information from said memory means and supplying said inspective information to said display apparatus.

10. An apparatus for preparing control program as claimed in claim 6, characterized in comprising
a means for preparing net list information relating to said modules by using connecting information on said modules included in said control circuit at input side and at output side and inspective information on said modules, and
said means for preparing control program to prepare said control program by using said net list information.

11. An apparatus for preparing control program as claimed in claim 10, wherein said means for preparing control program prepares said control program by converting source program which is prepared based on said net list information to machine language.

12. A control program inspecting apparatus characterized in comprising
a means for reading out control programs which is prepared by combining inspective program including inspective data preparing program and inspection executing program relating to modules with main body section of control program relating to control circuit wherein a plurality of said modules are connected from storing medium which stores said control program, and
a means for inspecting the main body section of said control program by using said read out inspective program.

13. A digital control apparatus characterized in comprising
first memory means for storing main body section of control program relating to control circuit wherein a plurality of modules are connected,
second memory means for storing inspective programs including inspective data preparing program and inspection executing program on aid modules,
a means for obtaining control signals by execution of processing in the main body section of said control program,
a means for transmitting said control signals to controlling objective,
a means for inspecting the main body section of said control program by using said inspective program, and
a means for preventing inspection by said inspective means when control is executed by the main body section of said control program, and allowing inspection by said inspective means based on supplied inspection instruction when control by the main body section of said control program is terminated.
